# EUROPÄISCHE PATENTSCHRIFT

(11) **EP 3 146 280 B1**
(45) Veröffentlichungstag und Bekanntmachung des Hinweises auf die Patenterteilung: **18.07.2018**
(21) Anmeldenummer: 15725567.0
(22) Anmeldetag: 21.05.2015
(51) Int. Cl.: F25B 41/06

(54) **EXPANSIONSVENTIL**
EXPANSION VALVE
SOUPAPE DE DÉTENTE

(30) Priorität: 23.05.2014 DE 102014107279
(43) Veröffentlichungstag der Anmeldung: 29.03.2017
(73) Patentinhaber: Otto Egelhof GmbH & Co. KG, 70736 Fellbach (DE)
(72) Erfinder: WILLERS, Eike, 70469 Stuttgart (DE); WALDENBURG, Albrecht, 71404 Korb (DE); AGUILAR, Joan, 71686 Remseck a. N. (DE)
(74) Vertreter: Mammel und Maser
(86) Internationale Anmeldenummer: PCT/EP2015/061287
(87) Internationale Veröffentlichungsnummer: WO 2015/177290

(56) Entgegenhaltungen:
- DE-U1-202011 051 346
- JP-A- 2007 017 127
- US-A- 5 005 370
- US-A1- 2006 038 153

## Beschreibung

Die Erfindung betrifft ein Expansionsventil, insbesondere für eine Fahrzeugklimaanlage, gemäß dem Oberbegriff des Anspruchs 1.

Aus der DE 20 2011 051 346 U1 ist ein Expansionsventil, insbesondere für eine Fahrzeugklimaanlage, bekannt. Dieses Expansionsventil umfasst ein Gehäuse mit einer Einlassöffnung und einer Auslassöffnung, welche mit einer Durchgangsbohrung miteinander verbunden sind. Des Weiteren ist ein Regulierraum zwischen der Einlassöffnung und der Durchgangsbohrung vorgesehen, der diese verbindet. Im Regulierraum ist eine Reguliervorrichtung angeordnet, welche zumindest ein Regulierelement mit einem Ventilschließglied umfasst, welches einen an der Durchgangsbohrung vorgesehenen Ventilsitz schließt. Des Weiteren ist eine Betätigungseinrichtung vorgesehen, welche mittels eines Übertragungsstiftes auf das Ventilschließglied wirkt und die Reguliervorrichtung betätigt, wobei eine Stirnfläche des Übertragungsstiftes am Ventilschließglied anliegt und das Ventilschließglied aus einer Schließposition in eine Öffnungsposition zum Ventilsitz überführt sowie einen stirnseitigen Endbereich des Übertragungsstiftes aufweist, der an die Stirnfläche angrenzt und innerhalb der Durchgangsbohrung angeordnet ist, wobei der Endbereich des Übertragungsstiftes einen Steuerquerschnitt umfasst, so dass zwischen der Durchgangsbohrung und dem Übertragungsstift ein ringförmiger Spalt gebildet ist.

Aus der EP 0 689 015 A1 ist ein Expansionsventil, insbesondere für eine Fahrzeugklimaanlage, bekannt, welches ein Gehäuse mit einer Einlassöffnung und einer Auslassöffnung umfasst, sowie eine Durchgangsbohrung, welche die Einlassöffnung mit der Auslassöffnung verbindet, um eine Expansionsstelle für ein Medium, insbesondere Kältemittel, auszubilden, so dass das vom Kompressor und nachfolgenden Verflüssiger kommende Medium expandiert und dem Verdampfer zugeführt wird. Zur Ansteuerung einer Ventilanordnung an der Expansionsstelle ist eine Reguliervorrichtung in einem Regulierraum zwischen der Durchgangsbohrung und Einlassöffnung vorgesehen. Diese Ventilanordnung besteht aus einem Ventilschließglied, welches einen Ventilsitz an der Durchgangsbohrung in einer Schließposition schließt. Mittels eines Übertragungsstiftes, der von einer Betätigungseinrichtung ansteuerbar ist, kann das Ventil geöffnet werden und das Medium die Durchgangsbohrung durchströmen. Der Übertragungsstift greift dabei mit seiner am stirnseitigen Endbereich angeordneten Stirnfläche an dem Ventilschließglied an, um dieses aus der Schließposition in eine Öffnungsposition überzuführen. Der Übertragungsstift taucht dabei mit seinem stirnseitigen Endbereich in die Durchgangsbohrung ein. Aufgrund der gestuften Ausgestaltung des Übertragungsstiftes kann dieser bei einer ersten Hubbewegung das Ventilschließglied vom Ventilsitz abheben, so dass ein erster konstanter Strömungsquerschnitt freigegeben wird, der als Vorsteueröffnung wirkt. Anschließend wird über eine zweite Schulter am Übertragungsstift ein Servoventil betätigt, welches eine Hauptdurchgangsöffnung zwischen dem Einlass und dem Auslass öffnet. Der Querschnitt des Übertragungsstiftes ist in der Durchgangsbohrung zwischen der Einlassöffnung und der Auslassöffnung konstant.

Aus der DE 10 2009 060 017 A1 ist ebenfalls ein Expansionsventil bekannt, bei welchem mittels eines Übertragungsstiftes ein Ventilschließglied betätigt wird, indem dieses von einer Schließposition in eine Öffnungsposition durch Abheben aus einem Ventilsitz angesteuert wird. Ein stirnseitiger Endbereich des Übertragungsstiftes ist in der Durchgangsbohrung nahe zum Ventilsitz positioniert. Da der in die Durchgangsbohrung eingreifende Endbereich des Übertragungsstiftes einen konstanten Querschnitt aufweist, wird ein ringförmiger Spalt mit konstantem Querschnitt gebildet, der die Durchflussmenge des Mediums bei maximaler Öffnungsposition des Ventils bestimmt und beschränkt.

Ein solches Expansionsventil ist dahingehend ausgelegt, dass ein Druckverlust zwischen der Kompressorseite und der Verdampferseite groß ist, um verdampferseitig ein niedriges Druckniveau zu erreichen. Für bestimmte Systemrandbedingungen ist es jedoch erforderlich, dass eine größere Flexibilität im Durchfluss durch das Ventil ermöglicht ist, wie beispielsweise im Betrieb von sogenannten Speicherverdampfern, welche bei Start-/Stopp-Systemen Einsatz finden. Bei diesen Systemen muss der Verdampfer in kürzerer Zeit mit einem Kältemittel befüllt werden können als dies in Systemen ohne Speicherverdampfer der Fall ist. Mit herkömmlichen Ventilen einen COP (Coefficient Of Performance) optimierten Betrieb zu erreichen, ist sehr schwierig.

Der Erfindung liegt die Aufgabe zugrunde, ein Expansionsventil vorzuschlagen, bei welchem der prinzipielle Aufbau eines Ventils beibehalten bleibt, wobei jedoch eine Optimierung für die Durchströmung des Mediums ermöglicht ist, um sowohl eine optimale Nutzung des Speicherverdampfers zu ermöglichen und gleichzeitig einen hohen COP zu erreichen.

Diese Aufgabe wird durch ein Expansionsventil gelöst, bei welchem der sich in Strömungsrichtung zunehmend aufweitende Strömungsquerschnitt in der Durchgangsbohrung ausgehend von dem Steuerquerschnitt des Übertragungsstiftes durch eine Verjüngung am Endbereich des Übertragungsstiftes gebildet ist. Dadurch wird bei einer definiert anliegenden Druckdifferenz in einem Spalt, insbesondere ringförmigen Spalt, zwischen dem Übertragungsstift und der Bohrungswand der Durchgangsbohrung durch den größer werdenden Strömungsquerschnitt ein geringerer Druckabfall in Strömungsrichtung erzeugt, wodurch ein ansteigender Durchfluss des Mediums erzielt wird. Dies führt nicht nur zur Erhöhung des Massenstroms des Mediums, sondern ermöglicht auch eine Geräuschreduzierung gegenüber konventionellen Lösungen.

Eine bevorzugte Ausführungsform der Erfindung sieht vor, dass ein in Strömungsrichtung ausgebildeter Strömungsquerschnitt für die Erzeugung eines reduzierten Druckabfalls als diffusorförmiger Bereich ausgebildet ist. Dadurch wird eine Fließcharakteristik des Mediums erzielt, wie dies normalerweise in einem Diffusor stattfindet, wobei der diffusorförmige Bereich zwischen dem innerhalb der Durchgangsbohrung bewegbaren Endbereich des Übertragungsstiftes und der Bohrungswand der Durchgangsbohrung gestaltet ist.

Zur Erzeugung des Druckabfalls des günstigsten Strömungsquerschnitts kann der diffusorförmige Bereich aus einer Verjüngung am Endbereich des Übertragungsstiftes und der zylindrisch ausgebildeten Bohrungswand der Durchgangsbohrung gebildet sein. Alternativ kann der diffusorförmige Bereich aus der sich erweiternden Durchgangsbohrung und der Verjüngung am Endbereich des Übertragungsstiftes gebildet werden. Die Verjüngung am Endbereich des Übertragungsstiftes ist derart, dass eine Querschnittsreduzierung von einem Endabschnitt des Übertragungsstiftes in Richtung auf einen Schaftabschnitt des Übertragungsstiftes vorgesehen ist. Anders ausgedrückt weist der Endbereich des Übertragungsstiftes einen sich gegenüber einem Schaftabschnitt vergrößerten Durchmesser auf oder ist aufgeweitet. In Abhängigkeit der weiteren Parameter, wie beispielsweise des ansteigenden Massenstroms bei größerem Hub des Übertragungsstiftes zur Öffnung des Ventils beziehungsweise bei der Betätigung der Reguliervorrichtung, kann eine entsprechende Auswahl getroffen werden.

Bevorzugt ist vorgesehen, dass die Bohrungswand der Durchgangsbohrung sich konisch aufweitet oder durch eine aus wenigstens einem Radius, einer Krümmung und/oder einer Geraden gebildeten Übergang sich fließend aufweitet. In Abhängigkeit der weiteren geometrischen Verhältnisse als auch der Zugänglichkeit zur Fertigung solcher Bohrungen im Gehäuse kann eine entsprechende Auswahl zur Aufweitung der Durchgangsbohrung ausgewählt und angepasst werden.

Bevorzugt ist vorgesehen, dass die Aufweitung der Durchgangsbohrung in einem Öffnungswinkel zwischen 0,1° und 25° zur Längsachse der Durchgangsbohrung vorgesehen ist. Innerhalb dieses Bereiches kann die günstigste Diffusorform mit einem erhöhten Massendurchfluss erzielt werden.

Nach einer weiteren bevorzugten Ausgestaltung der Erfindung ist vorgesehen, dass der in die Durchgangsbohrung eintauchende Endbereich des Übertragungsstiftes eine sich an den Steuerquerschnitt anschließende Strömungsfläche aufweist, die in einem verjüngten Querschnitt endet, welcher kleiner als der Steuerquerschnitt ist. Dadurch ist ein sich verjüngender Endbereich gebildet oder die Verjüngung am Endbereich ausgebildet, der sich von einer an dem Ventilschließglied anliegenden Stirnfläche in Richtung Schaft oder mittlerer Schaftbereich des Übertragungsstiftes erstreckt. Diese Ausführungsform kann mit einer Bohrungswand der Durchgangsbohrung, welche zylindrisch oder zunehmend aufweitend ausgebildet ist, zusammen wirken. Diese Ausgestaltung weist den Vorteil auf, dass mit zunehmendem Hubweg des Übergangsstiftes ein ansteigender Massenstrom erzielt werden kann, da mit zunehmendem Hub der dadurch gebildete Diffusor im Spalt zwischen der Durchgangsbohrung und dem Übertragungsstift verlängert und die Diffusorwirkung vergrößert wird. Dies bedeutet auch, dass bei dieser Ausführungsform mit zunehmendem Hub der Strömungsquerschnitt aufgeweitet und somit bei gegebenem Druckabfall der förderbare Massenstrom erhöht wird.

Die axiale Länge der Verjüngung am Endbereich des Übertragungsstifts entspricht vorteilhafterweise zumindest dem Hubweg des Übertragungsstiftes zur Ansteuerung der Reguliervorrichtung. Dadurch kann zur Erreichung eines maximalen Hubs eine optimale diffusorförmige Querschnittsvergrößerung erzielt werden, um bei gegebenem Druckabfall einen größeren Massenstrom durch das Expansionsventil zu fördern und dadurch beispielsweise einen Verdampfer schneller befüllen zu können.

Die Verjüngung am Endbereich des Übertragungsstiftes zwischen dem Steuerquerschnitt und dem verjüngten Querschnitt am Übertragungsstift ist durch eine Strömungsfläche gebildet, welche konisch ausgebildet sein kann. Alternativ kann dieser Bereich auch aus wenigstens einem Radius, einer Krümmung und/oder einer Geraden bestehen, um einen fließenden Übergang zu bilden. Vorteilhafterweise ist der Öffnungswinkel zwischen dem Steuerquerschnitt und dem verjüngten Querschnitt am Endbereich des Übertragungsstiftes zwischen 0,1° und 25° vorgesehen.

Eine weitere bevorzugte Ausgestaltung der Erfindung sieht vor, dass in einer Schließstellung des Ventilschließgliedes, welches an dem Ventilsitz anliegt, zumindest ein Teilbereich der Strömungsfläche des diffusorförmigen Bereichs sich außerhalb der Durchgangsbohrung erstreckt. Dadurch wird ermöglicht, dass selbst bei geringem Hub zum Abheben des Ventilschließgliedes aus dem Ventilsitz eine Strömungsoptimierung erfolgen kann.

Bei einem maximalen Hub des Übertragungsstiftes taucht die Verjüngung beziehungsweise die Strömungsfläche am Endbereich des Überführungsstiftes vorteilhafterweise vollständig in die Durchgangsbohrung ein oder die Länge der Durchgangsbohrung und die Länge des diffusorförmigen Bereichs sind aufeinander abgestimmt, so dass der diffusorförmige Bereich in der Durchgangsbohrung ausgebildet wird. Die Aufweitung der Strömungsfläche am Übertragungsstift kann auch an die Länge der Durchgangsbohrung angepasst sein. Auch kann die Position des Ventilschließgliedes in einer Schließposition beim Anliegen an dem Ventilsitz angepasst werden, so dass ein maximaler Hub zum Öffnen des Ventilschließgliedes auf die axiale Länge der Verjüngung angepasst ist. Dies gilt für alle drei Ausführungsformen zur Ausbildung des sich aufweitenden Strömungsquerschnitts, und zwar bei einer zylindrischen Bohrungswand und einer am Übertragungsstift angeordneten Verjüngung, bei einem zylindrischen Übertragungsstift und einer sich erweiternden Bohrungswand oder für die sich erweiternde Bohrungswand und den darin angeordneten und sich verjüngenden Endbereich des Übertragungsstiftes.

Zwischen der Stirnfläche des Übertragungsstiftes und dessen Steuerquerschnitt ist ein Übergang mit einer abgerundeten Kante vorgesehen. Dadurch kann eine verbesserte Fließcharakteristik und eine Verringerung an Verwirbelungen erzielt werden.

Dieser Radius der Abrundung zwischen der Stirnfläche des Übertragungsstiftes und dem Steuerquerschnitt ist bevorzugt zum Durchmesser der Stirnfläche am Endbereich des Übertragungsstiftes in einem Verhältnis von 1:5 bis 1:20 vorgesehen, das heißt, dass beispielsweise der Durchmesser der Stirnfläche das fünf- bis zwanzigfache des Radius der Abrundung umfasst.

Der Steuerquerschnitt im Endbereich des Übertragungsstiftes weist bevorzugt einen zylindrischen Abschnitt auf, der sich vorzugsweise unmittelbar an die abgerundeten Kanten von der Stirnfläche kommend anschließt. Dadurch kann eine kurze Strömungsberuhigung erfolgen.

Eine bevorzugte Ausführungsform der Erfindung sieht vor, dass der diffusorförmige Bereich durch zwei ineinander übergehende und gegenseitig ausgerichtete Radien ausgebildet ist. Dadurch wird nicht nur eine zunehmende Aufweitung, sondern auch eine stetige Aufweitung ermöglicht, wobei die Steigung entlang der Strömungsfläche nicht konstant sein muss. Vorzugsweise sind die Radien zur Bildung der Strömungsflächen ähnlich groß. Die Radien liegen bevorzugt in einer Größenordnung von 50 bis 200 % des Durchmessers des Steuerungsquerschnitts des Übertragungsstiftes. Dadurch wird eine besonders erhöhte Geräuschreduzierung erzielt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Schnittansicht eines Expansionsventils,
Figur 2 eine schematisch vergrößerte Ansicht eines erfindungsgemäßen Endbereichs eines Übertragungsstiftes für das Expansionsventil gemäß Figur 1,
Figur 3 eine schematisch vergrößerte Ansicht einer Ventilanordnung des Expansionsventils in einer Schließposition,
Figur 4 eine schematische Ansicht gemäß Figur 3 mit einem kleinen Hubweg des Übertragungsstiftes,
Figur 5 eine schematische Ansicht gemäß Figur 3 mit einem größeren Hubweg des Übertragungsstiftes,
Figur 6 eine schematische Schnittansicht gemäß Figur 3 bei einem maximalen Hub des Übertragungsstiftes und
Figur 7 eine schematische Ansicht eines Diagramms zur Darstellung eines Durchflusswertes einer Ventilanordnung mit einem Übertragungsstift gemäß Figur 3 im Verhältnis zu einem herkömmlichen Expansionsventil.

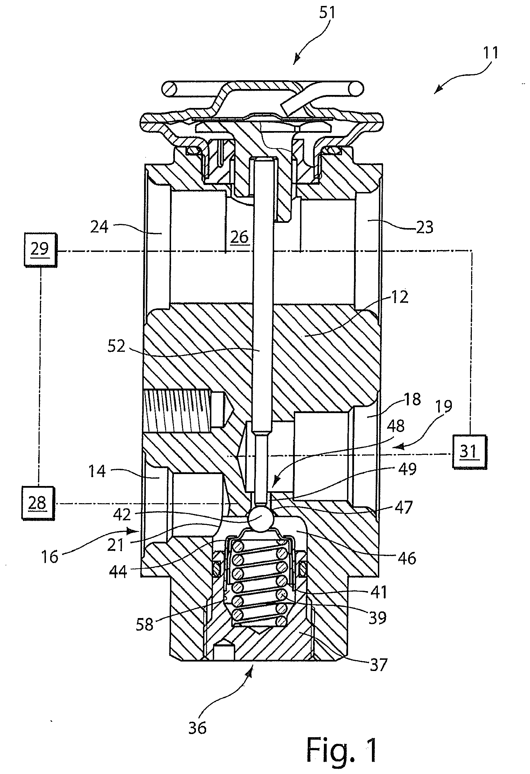

In Figur 1 ist eine aus dem Stand der Technik bekannte Ausführungsform eines Expansionsventils 11 dargestellt. Dieser Aufbau des Expansionsventils 11 ist beispielsweise aus der DE 10 2009 060 017 A1 bekannt. Dieses Expansionsventil 11 umfasst ein Gehäuse 12 mit einer ersten Einlassöffnung 14 auf einer Einlassseite 16, eine erste Auslassöffnung 18 auf einer Auslassseite 19 und einen die Einlassöffnung 14 und die Auslassöffnung 18 verbindenden Kanal 21. In dem Gehäuse 12 ist des Weiteren eine zweite Einlassöffnung 23 und eine zweite Auslassöffnung 24 durch einen Kanal 26 miteinander verbunden. An die erste Einlassöffnung 14 ist die Austrittseite eines Verflüssigers 28 angeschlossen, dessen Eintrittseite mit der Austrittseite eines Kompressors 29 verbunden ist. Die Eintrittseite des Kompressors 29 steht mit einer Austrittseite eines Verdampfers 31 in Verbindung, der eingangsseitig mit der Auslassöffnung 18 in Verbindung steht.

Der Kanal 21 mündet in einen Regulierraum 46, in welchem eine Reguliervorrichtung 36 einsetzbar ist. Diese Reguliervorrichtung 36 umfasst eine Regulierschraube 37, ein Regulierelement 39, insbesondere eine Regulierfeder, die in der Regulierschraube 37 positioniert ist sowie eine Dämpfungshülse 41, die die Regulierfeder 39 umgreift und ein Ventilschließglied 42 fixiert. An einer Dämpfungshülse 41 ist eine Dämpfungsfeder 44 vorgesehen, die in dem hohlzylindrischen Körper der Regulierschraube 37 zur dämpfenden Hubbewegung des Ventilschließgliedes 42 angreift.

Zum Regulierraum 46 weisend ist ein Ventilsitz 47 vorgesehen, der mit dem Ventilschließglied 42 eine Ventilanordnung 48 bildet. Der Ventilsitz 47 mündet in eine Durchgangsbohrung 49, die die Einlassseite 16 mit der Auslassseite 19 verbindet.

Zur Betätigung der Reguliervorrichtung 36 ist eine Betätigungseinrichtung 51 vorgesehen, die beispielsweise als ein sogenannter Thermokopf ausgebildet ist, welche über einen Übertragungsstift 52 das Ventilschließglied 42 in eine Öffnungs- und Schließstellung in Abhängigkeit der Betriebsparameter des Mediums steht, welches vom Verdampfer 31 zum Kompressor 29 strömt.

Das in Figur 1 dargestellte Gehäuse 12 kann auch als sogenanntes Zwei-Port-Gehäuse vorgesehen sein, bei dem die zweite Einlass- und Auslassöffnung 23, 26 nicht vorgesehen sind. Die Reguliervorrichtung 36 kann nach einer alternativen Ausgestaltung des Expansionsventils 11 eine Wegerzeugungseinrichtung, wie beispielsweise ein Magnetventil, sowie ein Abschaltventil umfassen.

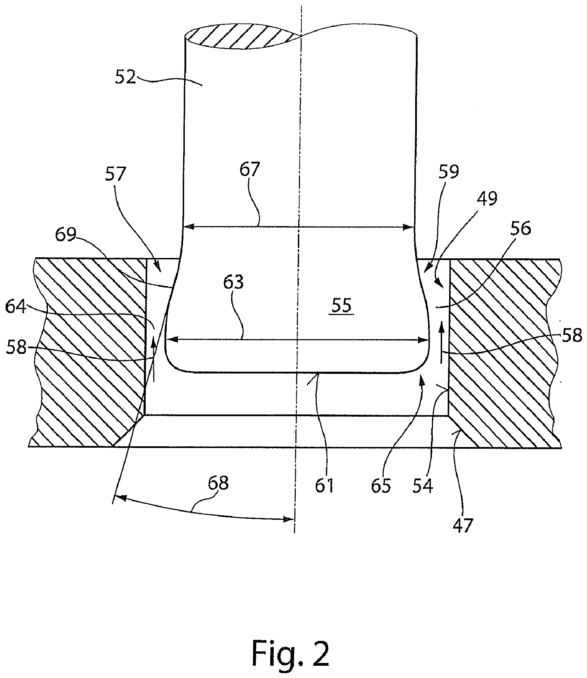

In Figur 2 ist schematisch vergrößert eine erste Ausführungsform der Erfindung dargestellt, bei welcher zwischen einem in der Durchgangsbohrung 49 angeordneten Endbereich 55 des Übertragungsstiftes 52 und einer Bohrungswand 54 der Durchgangsbohrung 49 ein Strömungsquerschnitt 56 ausgebildet ist, der sich in Strömungsrichtung des Mediums gemäß Pfeil zunehmend aufweitet. Bei dieser Ausführungsform ist vorgesehen, dass die Bohrungswand 54 zylindrisch ausgebildet ist und die Aufweitung des Strömungsquerschnitts 56 an dem Endbereich 55 des Übertragungsstiftes 52 als ein diffusorförmiger Bereich 57 vorgesehen ist, der durch eine Strömungsfläche 59 an den Endbereich 55 des Übertragungsstiftes 52 gebildet ist. Diese Strömungsfläche 59 wirkt mit der Bohrungswand 54 zusammen, so dass dadurch eine strömungsgünstige Aufweitung des Strömungsquerschnitts 56 gegeben ist.

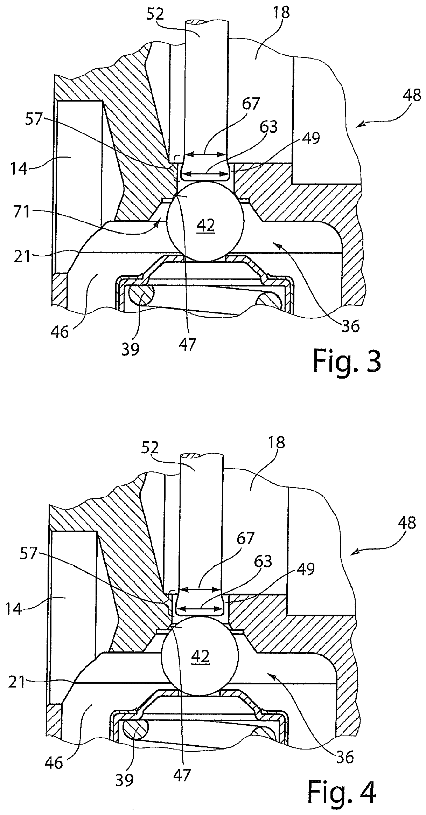

Der Übertragungsstift 52 weist an seinem stirnseitigen Ende eine Stirnfläche 61 auf, welche an dem in Figur 2 nicht näher dargestellten Ventilschließglied anliegt und bei einer Hubbewegung des Übertragungsstiftes 52 das Ventilschließglied gegenüber dem Ventilsitz 47 abhebt. (siehe Figur 4 bis 6) Der Endbereich 55 des Übertragungsstiftes 52 erstreckt sich von der Stirnfläche 61 in axialer Richtung derart, dass dieser bei einer maximalen Hubbewegung des Übertragungsstiftes 52 bündig mit einem dem Ventilsitz 47 gegenüberliegenden Ende der Durchgangsbohrung 49 ist oder innerhalb der sich daran anschließenden Auslassöffnung 18 liegt.

Ein maximaler Durchmesser des Endbereiches 55 des Übertragungsstiftes 52 wird durch einen Steuerquerschnitt 63 gebildet, durch welchen ein maximaler ringförmiger Spalt 64 zwischen der Bohrungswand 54 der Durchgangsbohrung 49 bestimmt ist. Die Größe des ringförmigen Spaltes 64 ist an die jeweiligen Betriebsparameter einer Klimaanlage oder eines Regelkreises angepasst. Zwischen dem Steuerquerschnitt 63 und der Stirnfläche 61 ist bevorzugt eine Abrundung 65 vorgesehen, welche bevorzugt durch einen Radius ausgebildet ist. Alternativ kann auch eine Phase oder ein von einem Radius abweichender strömungsgünstiger Übergang in den Steuerquerschnitt 63 vorgesehen sein.

Der Steuerquerschnitt 63 kann bevorzugt einen schmalen zylindrischen Bereich mit einer parallelen Außenumfangsfläche zur Bohrungswand 54 umfassen. Der Abstand des Steuerquerschnitts 63 zur Stirnfläche 61 bestimmt sich vorteilhafterweise nach der erforderlichen Leistungsklasse der Klimaanlage. Die Länge des zylindrischen Bereichs mit dem Steuerquerschnitt 63 wird an die geometrischen Randbedingungen des Ventils angepasst.

Von dem Steuerquerschnitt 63 aus erstreckt sich die Strömungsfläche 59 zu einem verjüngten Querschnitt 67, der im Durchmesser gegenüber dem Steuerquerschnitt 63 verringert ist. Dadurch wird die Verjüngung am Endbereich 55 des Übertragungsstiftes gebildet. Dazwischen liegend ist bevorzugt ein Öffnungswinkel für die Strömungsfläche 59 ausgebildet, der in einem Bereich zwischen 0,1° und 25° vorgesehen ist. Die Strömungsfläche 59 ist stufenfrei ausgebildet und weist fließende Übergänge vom Steuerquerschnitt 63 in den verjüngten Querschnitt 67 auf. Beispielsweise ist ein erster Bereich beginnend vom Steuerungsquerschnitt 63 mit einem Radius versehen, welcher in einen Übergangspunkt 69 in einen gegenläufigen Radius wechselt, wobei vorteilhafterweise beide Radien etwa gleich groß sind. Dadurch ist eine Optimierung für den herzustellenden Druckabfall gegeben. Alternativ kann vorgesehen sein, dass die Strömungsfläche 59 teilweise oder vollständig konisch ausgebildet oder zwischen zwei Radien eingebunden ist, um fließende Übergänge zu schaffen.

Der axiale Abstand der Stirnfläche 61 zum verjüngten Querschnitt 67 des Übertragungsstiftes im Bereich des Diffusorendes beziehungsweise Ende des diffusorförmigen Bereichs 57 entspricht wenigstens der Länge der Bohrungswand 54 beginnend vom Ventilsitz 47. In einer Ausgangsposition des Übertragungsstiftes 52 - also bei geschlossener Ventilanordnung 48, bei der die Stirnfläche 61 am Ventilschließglied 42 anliegt - liegt ein Teilbereich des diffusorförmigen Bereichs 57 außerhalb der Durchgangsbohrung 59. Bei einem maximalen Öffnungshub des Übertragungsstiftes 42 kann der Endbereich 55 des Übertragungsstiftes 52 soweit in die Durchgangsbohrung 49 eintauchen, dass der verjüngte Querschnitt 67 bündig oder in dem dem Ventilsitz 47 gegenüberliegenden Ende der Durchgangsbohrung 54 liegt und hierdurch der diffusorförmige Bereich 57 in voller Länge ausgeformt wird.

Im Anschluss an die Verjüngung am Übertragungsstift 52, die durch den verjüngten Querschnitt 67 vorteilhafterweise endet, erfolgt bevorzugt ein Schaftabschnitt mit einem konstanten Querschnitt des Übertragungsstiftes 52, der sich zumindest teilweise innerhalb der Auslassöffnung 18 erstreckt. Auch kann an den verjüngten Querschnitt anschließend ein sich vergrößernder Querschnitt oder ein durch eine Stufe vergrößerter Querschnitt des Übertragungsstiftes 52 vorgesehen sein.

Die Anordnung und Ausgestaltung der Verjüngung am Endbereich des Übertragungsstiftes 52 zur Bildung des sich aufweitenden Strömungsquerschnitts 56 gemäß Figur 2 gilt analog für die Aufweitung der Bohrungswand 54 der Durchgangsbohrung 49 und einen Übertragungsstift 52 mit einem zylindrischen Endbereich 55.

Des Weiteren kann alternativ vorgesehen sein, dass sowohl die Verlängerung an dem Endbereich 55 des Übertragungsstiftes 52 als auch die Aufweitung an der Bohrungswand 54 zur Bildung des in Strömungsrichtung zunehmend sich aufweitenden Strömungsquerschnitts 56 vorgesehen ist, wobei die jeweiligen Öffnungswinkel 68 in der Summe in einem Bereich von 0,1 bis 25° liegen.

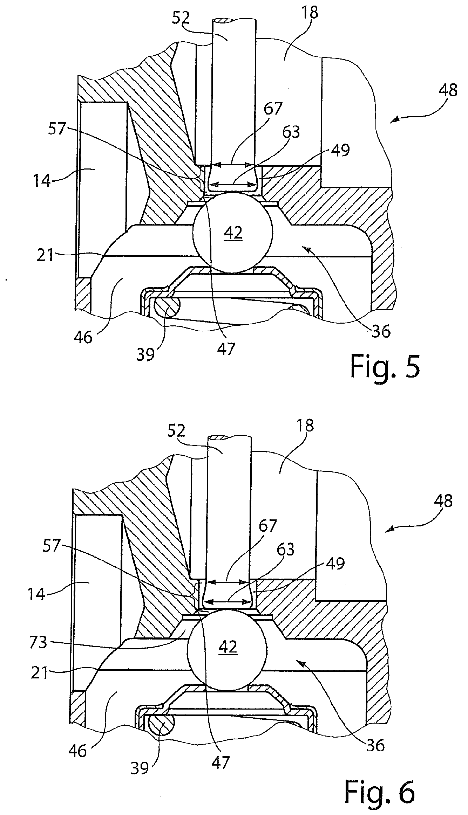

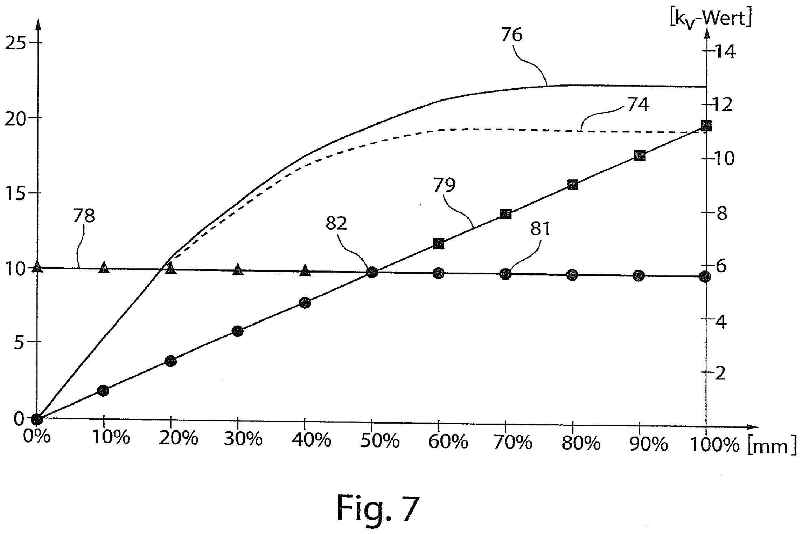

In den Figuren 3 bis 6 ist die Ventilanordnung 48 in unterschiedlichen Ansteuerpositionen beziehungsweise Hubstellungen des Übertragungsstiftes 52 dargestellt. Figur 3 zeigt die Ventilanordnung 48 in einer Schließposition 71. In Figur 4 ist die Ventilanordnung 48 mit einem Öffnungshub von beispielsweise 30 % des maximalen Öffnungshubes dargestellt. Die Figur 5 zeigt die Ventilanordnung 48 mit einem Öffnungshub von beispielsweise 70 % des maximalen Öffnungshubes und Figur 6 zeigt die Ventilanordnung 48 in einer Öffnungsposition 73 mit dem maximalen Öffnungshub. Aufgrund der Ausgestaltung des diffusorförmigen Bereichs 57 zwischen der Durchgangsbohrung 49 und dem Übertragungsstift 42 kann bezüglich den in den Figuren 3 bis 6 dargestellten Öffnungspositionen des Ventilschließgliedes 42 die in Figur 7 dargestellte Durchflusskennlinie 76 gegenüber einer Durchflusskennlinie 74 mit einem Expansionsventil gemäß dem Stand der Technik erzielt werden. Beim Expansionsventil gemäß dem Stand der Technik sind die Durchgangsbohrung und der Endbereich des Übertragungsstiftes zylindrisch ausgebildet, so dass ein konstanter Strömungsquerschnitt gebildet ist.

Beim Diagramm gemäß Figur 7 ist entlang der Abzisse der Öffnungshub des Übertragungsstiftes 52 in Prozent angegeben. Die linke Ordinate zeigt beispielsweise normierte Durchflussquerschnitte der Ventilanordnung 48 bzw. des Spaltes 64. Die rechte Ordinate zeigt einen Durchflusswert eines Ventils in Abhängigkeit eines bestimmten Hubes. Die dargestellte Kennlinie 78 zeigt die Fläche des kreisringförmigen Spaltes 64 des Expansionsventils 11 mit einer Expansionsstelle gemäß den Figuren 2 bis 6, welche unabhängig des Hubes bei der Ausführungsform eine konstante Größe aufweist. Die Kennlinie 79 zeigt das Verhältnis der Querschnittsfläche zwischen dem Ventilsitz 47 und dem Ventilschließglied 42 in Abhängigkeit des Hubes, welche bis zum Erreichen des maximalen Öffnungshubs linear zunimmt. Die Kennlinie 81 zeigt für verschiedene Hübe die jeweilige maximale freie Querschnittsfläche, die sich - je nach Hubweg- aus den Linien 78 und 79 ergibt. Die Kennlinie 81 zeigt bis zu einem Hub von beispielsweise 50 % des maximalen Hubes des Übertragungsstiftes 52 die resultierende freie Fläche bzw. den Strömungsquerschnitt zwischen dem Ventilschließglied 42 und dem Ventilsitz 47 und anschließend den Strömungsquerschnitt des Spaltes 64, der sich aus den Kennlinien 78 und 79 ergibt. Bei einem Öffnungshub von beispielsweise 30 % ist die freie Fläche zwischen dem Ventilschließglied 42 und dem Ventilsitz 47 kleiner als der Spalt 64, so dass dadurch eine Drosselung des Strömungsquerschnitts erfolgt, ohne dass dem diffusorförmigen Bereich 57 eine maßgebliche Bedeutung beikäme. Bei einem Hub von beispielsweise 50 % ist der Öffnungsquerschnitt zwischen dem Ventilschließglied 42 und dem Ventilsitz 47 gleich groß wie der Spalt 64. Dieser Punkt ist mit der Ziffer 82 gekennzeichnet. Bei einem weiteren Öffnungshub, beispielsweise 70 %, der in Figur 5 dargestellt ist, steigt zwar der Abstand zwischen dem Ventilschließglied 42 und dem Ventilsitz 47 an, jedoch wird die Durchflussmenge in weitaus stärkerem Maße durch den Spalt 64 beschränkt. Gleiches gilt bei maximalem Hub des Übertragungsstiftes 52.

Bei einem Übertragungsstift 52 mit einem zylindrischen Endbereich gemäß dem Stand der Technik wird ein Durchflusswert der durchströmenden Masse des Mediums gemäß der Kennlinie 74 erzielt. Beispielsweise ab einem Hub von 60 % ist ein maximaler Durchflusswert erreicht. Durch die erfindungsgemäße Ausgestaltung eines diffusorförmigen Bereichs 57 am Übertragungsstift 52 kann im Vergleich dazu bei gegebenem Druckgefälle ein erhöhter Durchflusswert gemäß Kennlinie 76 aufgrund einer Druckoptimierung in Strömungsrichtung erzielt werden. Dadurch ist offensichtlich, dass durch die Einbringung einer Diffusorgeometrie im Strömungsquerschnitt zwischen der Bohrungswand 54 der Durchgangsbohrung 49 und dem Übertragungsstift 52 eine strömungsbegünstigende Ausgestaltung der Ventilanordnung 46 geschaffen wird. Zudem wird bei Betrachtung der Figur 2 offensichtlich, dass mit zunehmendem Hub die Strömungsfläche 59 in die Durchgangsbohrung 49 eintaucht, so dass der sich aufweitende Strömungsquerschnitt 56 mit zunehmendem Hub verlängert wird und somit der bei gegebenem Druckabfall fließende Massenstrom zunimmt.

## Patentansprüche

1. Expansionsventil, insbesondere für eine Fahrzeugklimaanlage, mit einem Gehäuse (12), mit einer Einlassöffnung (14) und einer Auslassöffnung (18), welche mit einer Durchgangsbohrung (49) miteinander verbunden sind, mit einem Regulierraum (46), welcher zwischen der Einlassöffnung (14) und der Durchgangsbohrung (49) vorgesehen ist und diese verbindet, mit einer in dem Regulierraum (46) angeordneten Reguliervorrichtung (36), welche zumindest ein Regulierelement (39) mit einem Ventilschließglied (42) umfasst, welches einen an der Durchgangsbohrung (49) vorgesehenen Ventilsitz (47) schließt, mit einer Betätigungseinrichtung (51), welche mittels eines Übertragungsstiftes (52) auf das Ventilschließglied (42) wirkt und die Reguliervorrichtung (36) betätigt, wobei eine Stirnfläche (61) des Übertragungsstiftes (52) an dem Ventilschließglied (42) anliegt und das Ventilschließglied (42) aus einer Schließposition in eine Öffnungsposition zum Ventilsitz (47) überführt, sowie mit einem stirnseitigen Endbereich (55) des Übertragungsstiftes (52), der an die Stirnfläche (61) angrenzt und innerhalb der Durchgangsbohrung (49) angeordnet ist und der Endbereich (55) des Übertragungsstiftes (52) einen Steuerquerschnitt (63) umfasst, so dass zwischen der Durchgangsbohrung (49) und dem Übertragungsstift (52) ein ringförmiger Spalt (64) gebildet ist, **dadurch gekennzeichnet, dass** der sich in Strömungsrichtung zunehmend aufweitende Strömungsquerschnitt in der Durchgangsbohrung (49) ausgehend von dem Steuerquerschnitt (63) des Übertragungsstiftes (52) durch eine Verjüngung am Endbereich (55) des Übertragungsstiftes (52) gebildet ist.

2. Expansionsventil nach Anspruch 1, **dadurch gekennzeichnet, dass** der einen Druckabfall in Strömungsrichtung erzeugende Strömungsquerschnitt (56) als ein diffusorförmiger Bereich (57) ausgebildet ist.

3. Expansionsventil nach Anspruch 1, **dadurch gekennzeichnet, dass** der in Strömungsrichtung sich zunehmend aufweitende Strömungsquerschnitt (56) durch die Verjüngung am Endbereich (55) des Übertragungsstiftes (52) und eine zylindrische Durchgangsbohrung (49) oder durch eine sich erweiternde Durchgangsbohrung (49) und die Verjüngung am Endbereich (55) des Übertragungsstiftes (52) gebildet ist.

4. Expansionsventil nach einem der vorhergehenden Ansprüche, **dadurch gekennzeichnet, dass** ein stromab zum Ventilsitz (47) vorgesehener Durchmesser der Durchgangsbohrung (49) größer als ein an den Ventilsitz (47) angrenzender Durchmesser ausgebildet ist.

5. Expansionsventil nach einem der vorhergehenden Ansprüche, **dadurch gekennzeichnet, dass** die Bohrungswand (54) der Durchgangsbohrung (49) sich konisch in Richtung der Auslassöffnung (18) aufweitet oder durch einen sich aus wenigstens einem Radius einer Krümmung und/oder einer Geraden bestehenden fließenden Übergang gebildet ist.

6. Expansionsventil nach Anspruch 5, **dadurch gekennzeichnet, dass** die Aufweitung der Durchgangsbohrung (49) einen Öffnungswinkel (68) zwischen 0,1° und 25° zur Längsachse der Durchgangsbohrung (49) aufweist.

7. Expansionsventil nach einem der Ansprüche 1 bis 3, **dadurch gekennzeichnet, dass** der in die Durchgangsbohrung (49) eintauchende Endbereich (55) des Übertragungsstiftes (52) eine sich an den Steuerquerschnitt (63) in Strömungsrichtung zur Auslassöffnung (18) anschließende Strömungsfläche (59) aufweist, die mit einem verjüngten Querschnitt (67) endet, die kleiner als der Steuerquerschnitt (63) ist.

8. Expansionsventil nach Anspruch 7, **dadurch gekennzeichnet, dass** die axiale Länge des verjüngten Querschnitts (67) am Übertragungsstift (52) zur Bildung des diffusorförmigen Bereichs (57) zumindest einem Hubweg des Übertragungsstiftes (52) zur Ansteuerung der Reguliervorrichtung (36) entspricht.

9. Expansionsventil nach Anspruch 7 oder 8, **dadurch gekennzeichnet, dass** die Strömungsfläche (59) zwischen dem Steuerquerschnitt (63) und dem verjüngten Querschnitt (67) sich konisch in Richtung zur Auslassöffnung (18) verjüngt oder durch einen aus wenigstens einem Radius, einer Krümmung und/oder einer Geraden bestehenden fließenden Übergang ausgebildet ist.

10. Expansionsventil nach Anspruch 7 bis 9, **dadurch gekennzeichnet, dass** die Strömungsfläche (59) einen Öffnungswinkel (68) von 0,1° bis 25° zur Längsachse des Übertragungsstiftes (52) aufweist.

11. Expansionsventil nach einem der Ansprüche 7 bis 10, **dadurch gekennzeichnet, dass** in einer Schließstellung (71) des Ventilschließgliedes (42), welches am Ventilsitz (47) anliegt, zumindest ein Teilbereich der Strömungsfläche (59) sich außerhalb der Durchgangsbohrung (49) erstreckt.

12. Expansionsventil nach einem der Ansprüche 7 bis 11, **dadurch gekennzeichnet, dass** bei einem maximalen Hub des Übertragungsstiftes (52) die Verjüngung am Übertragungsstift (52) vollständig in die Durchgangsbohrung (49) eintaucht.

13. Expansionsventil nach einem der vorhergehenden Ansprüche, **dadurch gekennzeichnet, dass** zwischen der Stirnfläche (61) und dem Steuerungsquerschnitt (63) des Übertragungsstiftes (52) ein Übergang mit einer Abrundung (65) oder abgerundeten Kante vorgesehen ist, und vorzugsweise der Radius der Abrundung (65) zum Durchmesser der der Stirnfläche (61) in einem Verhältnis von 1:5 bis 1:20 ausgebildet ist.

14. Expansionsventil nach einem der vorhergehenden Ansprüche, **dadurch gekennzeichnet, dass** der Steuerquerschnitt (63) durch einen zylindrischen Abschnitt des Übertragungsstiftes (52) ausgebildet ist, der sich an die Abrundung (65) in Strömungsrichtung zur Auslassöffnung (18) gesehen anschließt.

15. Expansionsventil nach einem der vorhergehenden Ansprüche, **dadurch gekennzeichnet, dass** die Aufweitung der Durchgangsbohrung (49) und/oder die Strömungsfläche (59) durch zwei ineinander übergehende und gegenseitig ausgerichtete Radien ausgebildet ist, und vorzugsweise die Radien zur Bildung der Aufweitung und/oder der Strömungsfläche (59) in einem Bereich zwischen 50 % und 200 % des Durchmessers des Steuerquerschnitts (52) am Übertragungsstift (52) liegen.

## Claims

1. An expansion valve, in particular for a vehicle air conditioning system, including a housing (12), including an inlet opening (14) and an outlet opening (18) which are interconnected with each other by means of a through bore (49), including a regulation chamber (46) which is provided between the inlet opening (14) and the through bore (49) so as to interconnect the two of them, including a regulation device (36) which is arranged in the regulation chamber (46) and comprises at least one regulation member (39) having a valve closure member (42) which closes a valve seat (47) provided on the through bore (49), including an actuating device (51) which acts upon the valve closure member (42) by means of a transmission pin (52) and actuates the regulation device (36), an end face (61) of the transmission pin (52) being applied to the valve closure member (42) and transferring the valve closure member (42) from a closed position to an open position with respect to the valve seat (47), and including a frontal end region (55) of the transmission pin (52) which adjoins the end face (61) and is arranged within the through bore (49), and the end region (55) of the transmission pin (52) comprising a control cross-section (63) such that an annular gap (64) is formed between the through bore (49) and the transmission pin (52), **characterised in that** the cross-sectional area of flow in the through bore (49), increasingly flared in the direction of flow, is formed by a taper in the end region (55) of the transmission pin (52) starting from the control cross-section (63) of the transmission pin (52) .

2. The expansion valve as claimed in claim 1, **characterised in that** the cross-sectional area of flow (56) which creates a pressure drop in the direction of flow is realised in the form of a diffusor-shaped region (57).

3. The expansion valve as claimed in claim 1, **characterised in that** the cross-sectional area of flow (56), which is increasingly flared in the direction of flow, is formed by the taper in the end region (55) of the transmission pin (52) and a cylindrical through bore (49) or by a flared through bore (49) and said taper in the end region (55) of the transmission pin (52).

4. The expansion valve as claimed in any of the preceding claims, **characterised in that** a diameter of the through bore (49) provided downstream of the valve seat (47) is larger than a diameter adjacent to said valve seat (47).

5. The expansion valve as claimed in any of the preceding claims, **characterised in that** the bore wall (54) of the through bore (49) is conically flared in the direction of the outlet opening (18) or is formed by a smooth transition consisting of a radius, a curvature, and/or a straight line.

6. The expansion valve as claimed in claim 5, **characterised in that** the flare of the through bore (49) has an opening angle (68) of between 0.1 ∘ and 25 ° with respect to the longitudinal axis of the through bore (49).

7. The expansion valve as claimed in any one of claims 1 to 3, **characterised in that** the end region (55) of the transmission pin (52) that plunges into the through bore (49) has a flow area (59) that is arranged immediately downstream of the control cross-section (63) in the direction of flow towards the outlet opening (18) and ends in a tapered cross-section (67) which is smaller than the control cross-section (63).

8. The expansion valve as claimed in claim 7, **characterised in that** the axial length of the tapered cross-section (67) on the transition pin (52) for forming the diffusor-shaped region (57) corresponds to at least one stroke path of the transmission pin (52) when activating the regulation device (36).

9. The expansion valve as claimed in claim 7 or 8, **characterised in that** the flow area (59) between the control cross-section (63) and the tapered cross-section (67) has a conical taper in the direction of the outlet opening (18) or is formed by a smooth transition consisting of a radius, a curvature, and/or a straight line.

10. The expansion valve as claimed in claim 7 to 9, **characterised in that** the flow area (59) has an opening angle (68) of between 0.1 ° and 25 ° with respect to the longitudinal axis of the transmission pin (52).

11. The expansion valve as claimed in any one of claims 7 to 10, **characterised in that** when the valve closure member (42) is in a closed position (71), in which it is applied to the valve seat (47), at least a subsection of the flow area (59) extends out of the through bore (49).

12. The expansion valve as claimed in any one of claims 7 to 11, **characterised in that** at a maximum stroke of the transmission pin (52) the taper on the transmission pin (52) plunges entirely into the through bore (49).

13. The expansion valve as claimed in any of the preceding claims, **characterised in that** between the end face (61) and the control cross-section (63) of the transmission pin (52), a transition having a rounding (65) or rounded edge is provided and **in that** preferably the radius of the rounding (65) with respect to the diameter of the end face (61) is formed at a ratio of between 1 : 5 and 1 : 20.

14. The expansion valve as claimed in any of the preceding claims, **characterised in that** the control cross-section (63) is formed by a cylindrical portion of the transmission pin (52) that is arranged immediately downstream of the rounding (65) in the direction of flow toward the outlet opening (18).

15. The expansion valve as claimed in any of the preceding claims, **characterised in that** the flare of the through bore (49) and/or the flow area (59) is/are formed by two radii which transition into each other and are oppositely oriented, and **in that** preferably the radii for forming the flare and/or the flow area (59) are in a range of between 50 % and 200 % of the diameter of the control cross-section (52) on the transmission pin (52) .

## Revendications

1. Soupape de détente, en particulier pour un système d'air conditionné de véhicule automobile, avec un boîtier (12), avec un orifice d'entrée (14) et un orifice de sortie (18) reliés l'un à l'autre par un trou de passage (49), avec un espace de régulation (46) prévu entre l'orifice d'entrée (14) et le trou de passage (49) et reliant ces derniers entre eux, avec un dispositif de régulation (36) disposé dans l'espace de régulation (46) et comprenant au moins un élément de régulation (39) pourvu d'un organe de fermeture de soupape (42) qui ferme un siège de soupape (47) prévu au niveau du trou de passage (49), avec un dispositif d'actionnement (51) qui agit sur l'organe de fermeture de soupape (42) au moyen d'une tige de transmission (52) et actionne le dispositif de régulation (36), une face frontale (61) de la tige de transmission (52) reposant sur l'organe de fermeture de soupape (42) et faisant passer ledit organe de fermeture de soupape (42) d'une position de fermeture à une position d'ouverture par rapport au siège de soupape (47), et avec une partie d'extrémité côté frontale (55) de la tige de transmission (52) qui est contiguë à ladite face frontale (61) et est disposée à l'intérieur du trou de passage (49), et la partie d'extrémité (55) de la tige de transmission (52) comprenant une section de commande (63) de telle sorte qu'une fente annulaire (64) se forme entre le trou de passage (49) et la tige de transmission (52), **caractérisée en ce que** la section d'écoulement au niveau du trou de passage (49), laquelle va en s'élargissant de manière croissante dans le sens d'écoulement, est formée par un rétrécissement au niveau de la partie d'extrémité (55) de la tige de transmission (52), et ce depuis la section de commande (63) de la tige de transmission (52).

2. Soupape de détente selon la revendication 1, **caractérisée en ce que** la section d'écoulement (56) générant une chute de pression dans le sens d'écoulement est réalisée en tant que zone (57) en forme de diffuseur.

3. Soupape de détente selon la revendication 1, **caractérisée en ce que** la section d'écoulement (56) allant en s'élargissant de manière croissante dans le sens d'écoulement est formée par le rétrécissement au niveau de la partie d'extrémité (55) de la tige de transmission (52) et un trou de passage (49) de forme cylindrique ou bien par un trou de passage (49) de forme évasée et un rétrécissement au niveau de la partie terminale (55) de la tige de transmission (52).

4. Soupape de détente selon l'une quelconque des revendications précédentes, **caractérisée en ce qu'**un diamètre du trou de passage (49) prévu en aval du siège de soupape (47) est supérieur à un diamètre contigu audit siège de soupape (47).

5. Soupape de détente selon l'une quelconque des revendications précédentes, **caractérisée en ce que** la paroi de trou (54) du trou de passage (49) s'élargit de manière conique en direction de l'orifice de sortie (18) ou est formée par une transition progressive constituée par au moins un rayon, une courbure et/ou une droite.

6. Soupape de détente selon la revendication 5, **caractérisée en ce que** l'évasement du trou de passage (49) présente un angle d'ouverture (68) compris entre 0,1° et 25° par rapport à l'axe longitudinal du trou de passage (49).

7. Soupape de détente selon l'une quelconque des revendications 1 à 3, **caractérisée en ce que** la partie d'extrémité (55) de la tige de transmission (52) qui plonge dans le trou de passage (49) présente une surface d'écoulement (59) qui, dans le sens d'écoulement en direction de l'orifice de sortie (18), est contiguë à la section de commande (63) et se termine par une section rétrécie (67) qui est inférieure à la section de commande (63).

8. Soupape de détente selon la revendication 7, **caractérisée en ce que** la longueur axiale de la section rétrécie (67) située au niveau de la tige de transmission (52) et destinée à former la zone (57) en forme de diffuseur correspond à au moins une course de la tige de transmission (52) destiné à activer le dispositif de régulation (36).

9. Soupape de détente selon la revendication 7 ou 8, **caractérisée en ce que** la surface d'écoulement (59) située entre la section de commande (63) et la section rétrécie (67) va en se rétrécissant de manière conique en direction de l'orifice de sortie (18) ou est formée par une transition progressive constituée par au moins un rayon, une courbure et/ou une droite.

10. Soupape de détente selon l'une quelconque des revendications 7 à 9, **caractérisée en ce que** la surface d'écoulement (59) présente un angle d'ouverture (68) compris entre 0,1° et 25° par rapport à l'axe longitudinal de la tige de transmission (52).

11. Soupape de détente selon l'une quelconque des revendications 7 à 10, **caractérisée en ce qu'**au moins une partie de la surface d'écoulement (59) s'étend à l'extérieur du trou de passage (49) lorsque l'organe de fermeture de soupape (42) qui repose sur le siège de soupape (47) est en position de fermeture (71).

12. Soupape de détente selon l'une quelconque des revendications 7 à 11, **caractérisée en ce que** lors d'une course maximale de la tige de transmission (52), le rétrécissement situé au niveau de la tige de transmission (52) est entièrement plongé dans le trou de passage (49).

13. Soupape de détente selon l'une quelconque des revendications précédentes, **caractérisée en ce qu'**une transition présentant un arrondi (65) ou un bord arrondi est prévue entre la face frontale (61) et la section de commande (63) de la tige de transmission (52), et **en ce que** le rayon de l'arrondi (65) est réalisé de préférence selon un rapport compris entre 1:5 et 1:20 par rapport au diamètre de la face frontale (61).

14. Soupape de détente selon l'une quelconque des revendications précédentes, **caractérisée en ce que** la section de commande (63) est formée par une partie cylindrique de la tige de transmission (52) qui, vue dans le sens d'écoulement en direction de l'orifice de sortie (18), est contiguë à l'arrondi (65) .

15. Soupape de détente selon l'une quelconque des revendications précédentes, **caractérisée en ce que** l'évasement du trou de passage (49) et/ou la surface d'écoulement (59) est formé(e) ou sont formés par deux rayons orientés en sens contraire qui se trouvent dans le prolongement l'un de l'autre, et **en ce que** les rayons destinés à former l'évasement et/ou la surface d'écoulement (59) se situent de préférence dans une plage comprise entre 50 % et 200 % du diamètre de la section de commande (52) de la tige de transmission (52).
